**Europäisches Patentamt**

**European Patent Office**

**Office européen des brevets**

(19)

(11) Veröffentlichungsnummer: **0 118 031**
**B1**

(12) ## EUROPÄISCHE PATENTSCHRIFT

(45) Veröffentlichungstag der Patentschrift:
**05.11.86**

(21) Anmeldenummer: **84101045.7**

(22) Anmeldetag: **02.02.84**

(51) Int. Cl.⁴: **C 09 C 1/40,** C 01 F 7/44,
C 08 K 3/22

(54) Füllstoff auf Basis von Aluminiumhydroxid und Verfahren zu seiner Herstellung.

(30) Priorität: **07.03.83 DE 3308023**

(43) Veröffentlichungstag der Anmeldung:
**12.09.84 Patentblatt 84/37**

(45) Bekanntmachung des Hinweises auf die Patenterteilung:
**05.11.86 Patentblatt 86/45**

(84) Benannte Vertragsstaaten:
**AT BE CH DE FR GB IT LI LU NL SE**

(56) Entgegenhaltungen:
**WO-A-80/01799
DE-C-956 535
US-A-1 953 201**

(73) Patentinhaber: **VEREINIGTE ALUMINIUM- WERKE
AKTIENGESELLSCHAFT, Berlin - Bonn Postfach
2468 Georg- von- Boeselager- Strasse 25, D-5300
Bonn 1 (DE)**

(72) Erfinder: **Braun, Dieter J., Dr. Dipl.- Chem.,
Reichensteinstrasse 47C, D-5210 Kriegsdorf (DE)**
Erfinder: **Rohlmann, Reinhold, Brüsseler Strasse
37, D-5300 Bonn 1 (DE)**

(74) Vertreter: **Müller- Wolff, Thomas, Dipl.- Ing.,
Georg- von- Boeselager- Strasse 25 Postfach 2468,
D-5300 Bonn 1 (DE)**

## Beschreibung

Die Erfindung betrifft einen Füllstoff auf der Basis von Aluminiumhydroxid ($Al_2O_3$ - $xH_2O$, x = 1-3) mit einer endothermen Zersetzungswärme 900 Kj/kg, und ein Verfahren zur seiner Herstellung.

Es ist bekannt, Aluminiumhydroxid in Kunststoffmassen zur Verbesserung der Flammwidrigkeit und Verringerung der Rauchgasbildung einzusetzen (DE-OS 28 53 827 und DE-OS 30 26 709). Dabei wird die Tatsache ausgenutzt, daß Aluminiumhydroxid chemisch gebundenes Wasser enthält, welches im Falle des Brandes bei höheren Temperaturen freigesetzt wird.

Als Kunststoffe werden häufig ungesättigte Polyesterharze, ABS, Acrylate, Epoxidharze, Pheonolharze, Polycarhonate, Polysterol u.a. eingesetzt. Diese Kunststoffe sind von Natur aus farblos und z.T. durchsichtig (transluzent). Aluminiumhydroxid weist mit $n_D$ = 1,58 annähernd den Brechungsindex dieser Kunststoffe auf. Daher bleibt bei der Verwendung von $Al(OH)_3$ als Füllstoff die Transluzenz erhalten. Zur Herstellung deckend weißer, flammhemmender Kunststoffe ist es erforderlich, zusätzlich zu Aluminiumhydroxid pigmentierende Zusätze wie z.B. Kalziumcarbonat zu verwenden.

Als pigmentierender Zusatz wird ebenfalls dehydratisiertes Aluminiumhydroxid verwendet, das mindestens 0,5% jedoch höchstens 18% Hydratwasser enthält. Gemäß DE-PS 956 535 werden dabei Kristalle mit Größendurchmesser von 0,5µm verwendet. Nachteilig an diesem Zusatz ist die geringe flammhemmende Wirkung sowie die hohe BET-Oberfläche, die die Einmischbarkeit sehr stark herabsetzt und hohe Füllgrade nicht erlaubt.

Aufgabe der vorliegenden Erfindung ist es, folgende Anforderungen an einen Füllstoff zu erfüllen:

1. Hoher Weißgrad ( > 88%) und möglichst hohe Herabsetzung der Lichtdurchlässigkeit von Kunststoffen.

2. Hohe endotherme Zersetzungswärme, die im Bereich von 150° - 700°C mehr als 900 Kj/kg beträgt; keine Freisetzung giftiger Gase beim Brand.

3. Gute Einmischharkeit und Füllgrade von bis zu 80% in polymere Materialien durch niedrige BET-Oberfläche.

4. Erreichung guter Festigkeitswerte in ausgehärteten Kunststoffmatrices.

Die Aufgabe wird durch die in den Patentansprüchen angegebenen Merkmale gelöst. Normalerweise wird Aluminiumhydroxid aus Natriumaluminatlauge ausgefällt, durch Trocknen von physikalisch anhaftendem Wasser befreit und als pulverförmige Substanz verkauft. In diesem Zustand weist es einen Brechungsindex von etwa $n_D$ = 1,58 auf.

Andererseits wird zur Verwendung in der Aluminiumelektrolyse oder in keramischen Materialien in einem Kalzinierofen auch der chemisch gebundene Wasseranteil vollständig entfernt. Dieses Produkt besteht aus γ-$Al_2O_3$ und α-$Al_2O_3$. Die wasserhaltigen Verbindungen Hydrargillit $Al_2O_3$. $3H_2O$ oder Böhmit $Al_2O_3$ - $1H_2O$ sind nicht mehr enthalten. Der Brechungsindex der wasserfreien, kalzinierten Produkte heträgt $n_D$ = 1,74.

In keinem Fall wird eine teilweise oberflächliche Entwässerung angestreht oder erreicht, bei der gleichzeitig ein hoher Wassergehalt erhalten hleibt, der Brechungsindex an der Oberfläche der einzelnen Kristallite jedoch hereits deutlich über $n_D$ = 1,58 angestiegen ist. Dies wird durch das erfindungsgemäße Verfahren in allen aufgeführten Beispielen erreicht ($n_D$ > 1,65).

Die in den Beispielen angeführte Entwässerung kann auf verschiedene Weise erfolgen. Als vorteilhafte Durchführungsform hat sich die Entwässerung an Luft bei Temperaturen zwischen 180 (24 Stunden) und 220°C (0,5 Stunden) erwiesen. Bei Hydrargillitkörnern mit einer mittleren Korngröße von über 15µm - 28µm wird bei Einbettung in ein Medium mit einem Brechungsindex zwischen 1,5 und 1,65 eine Erhöhung der Remission der Normlichtart C (Absolut-Weißgrad) um 250% gegenüber unbehandelten Aluminiumhydroxidqualitäten erreicht. Trotz hoher Füllstoffanteile bis zu 75% bleibt die Biegewechselfestigkeit bei über 60 $N/mm^2$, so daß die üblichen Festigkeitsanforerungen der Kunststoffverarbeiter erfüllt werden.

Im folgenden wird die Erfindung anhand von 8 Beispielen näher erläutert, wobei ein Beispiel mit abweichendem Korndurchmesser und 4 Beispiele mit ahweichener Entwässerung zum Vergleich herangezogen wurden.

## Beispiel 1

Aluminiumhydroxid aus dem Bayer-Prozeß mit einer mittleren Korngröße von 28µm wird für 4 Stunden auf 180°C an Luft erhitzt. Der chemisch gebundene Wassergehalt war durch die Behandlung um 0,6% erniedrigt worden. Der Ausgangswert war nach vorheriger Trocknung von physikalisch anhaftender Feuchte 34,6%, Endwert nach der Entwässerung 34,0%. Die BET-Oberfläche der Probe betrug 0,2 $m^2$/g. Die Probe wurde mit einem ungesättigten Polyesterharz im Verhältnis 1:1 gemischt und ausgehärtet.

Viskosität der Mischung 1: 7,0 Pa.s

Weißgrad der ausgehärteten Mischung 1: 55%

Biegewechselfestigkeit der ausgehärteten Mischung 1: 65 $N/mm^2$

Flammfestigkeit LOI nach ASTM D 2863: 32,1%

Zur Charakterisierung der Flammfestigkeit wurde der LOI (Limiting Oxygen Index) benutzt, der das Brennverhalten der Probe in einem Gemisch aus Sauerstoff und Stickstoff bestimmt. Der LOI-Wert ist dabei definiert als der %-Gehalt an Sauerstoff, der das Brennen der Probe gerade noch unterhält. Zum Vergleich beträgt der LOI des reinen Harzes 16,8%.

**Beispiel 2**

Das gleiche Hydroxid wie in Beispiel 1 wurde für 2 Stunden auf 220°C erhitzt. Die charakterisierenden Daten der Probe wurden in gleicher Weise bestimmt wie in Beispiel 1.
Erniedrigung des chemisch gebundenen Wassergehalts: 4%
Viskosität: 7,8 Pa.s
LOI: 31,5%
Absolutweißgrad: 70%
Biegewechselfestigkeit 65 N/mm

**Beispiel 3**

Aluminiumhydroxid aus dem Bayer-Prozeß mit einer Korngröße von 28 μm wurde in einem Autoklaven hydrothermal mit Wasser im Gew.-Verhältnis 1:4 bei 180°C für 3 Stunden behandelt. Das nach dem Aufschluß erhaltene Produkt wurde bei 105°C getrocknet (2 Stunden). Die analog Beispiel 1 ermittelten charakteristischen Daten betrugen:
Erniedrigung des chemisch gebundenen Wasseranteils: 4%
Viskosität: 7,6 Pa.s
LOI: 31,8%
Absolutwei-grad der Harz-Hydroxid-Mischung: 71%
BET-Oberfläche: 0,3 m$_2$/g

**Beispiel 4**

Aluminiumhydroxid aus dem Bayer-Prozeß mit einer mittleren Korngröße von 9 μm wurde analog Beispiel 2 behandelt (an Luft erhitzt für 2 h bei 180°C). Das Hydroxid wurde im Verhältnis 1: 1 mit dzm ungesättigten Polyesterharz gemäß Beispiel 1 vermischt. Es ergaben sich folgende Werte:
Erniedrigung des chemisch gebundenen Wassergehalts: 0,6%
Viskosität: 17,5 Pa.s
LOI: 31,5%
Absolutweißgrad: 63%
BET-Oberfläche: 2,9 m$_2$/g
Biegewechselfestigkeit 65 N/mm$_2$
Ein Vergleich der Mischungen 1 und 4 zeigt, daß Materialen geringerer Korngröße bei gleichen Erniedrigungen des Glühverlustes geringere pigmentierende Eigenschaften aufweisen als gröbere Materialien.
Dieses Beispiel 4 zeigt, daß bei Verwendung von Materialien mit geringem mittleren Korndurchmesser (9μm) ein schlechterer Absolutweißgrad erreicht wird, als bei gleichem Probenmaterial von 28 μm Korndurchmesser.
Ergänzende Versuche haben gezeigt, daß eine kritische Ahnahme des Weißgrades bei weniger als 15 μm eintritt.

**Vergleichsbeispel 1-4**

Zum Vergleich der Eigenschaften des erfindungsgemäß hergestellten Aluminiumhydroxids mit üblicherweise eingesetzten Aluminiumhydroxidqualitäten wurden ein handelsübliches, bezüglich der Viskosität besonders günstiges Aluminiumhydroxid (d$_{50}$: 28 μm) sowie ein handelsübliches gemahlenes Hydroxid (d$_{50}$: 15 μm) in unbehandelter sowie in zu stark entwässerter Form in Harz eingebettet. Die Verminderung des chemisch gebundenen Restwassers betrug in diesen Proben 7%. Die Ergebnisse sind in untenstehender Tabelle angegeben. Aus einem Vergleich der Tabelle mit den Beispielen 1 und 2 ist ersichtlich, daß die erfindungsgemäß hergestellten Hydroxide den handelsüblichen Hydroxiden in Biegewechselfestidkeit sowie der Viskosität ebenbürtig sind. Die Viskosität des gemahlenen Hydroxids liegt sogar wesentlich höher. Auch das Brennverhalten, hier dokumentiert durch den LOI, ist nahezu gleich. Der Weißgrad der ausgehärtetem Harz-Hydroxid-Mischung hat jedoch durch die erfindungsgemäße Behandlung um bis zu 250% zugenommen. Das Produkt mit einer Verminderung des Glühverlustes um 7% zeigt bereits eine deutliche Erhöhung der Viskosität und Verringerung des LOI-Index, die durch die weitgehende Herabsetzung der endothermen Zersetzungswärme auf unter 900 Kj/kg infolge übermäßiger Entwässerung verursacht wurde.

3

Eine derart weitgehende Entwässerung sollte daher in einer vorteilhaften Ausführung des erfindungsgemäßen Verfahrens vermieden werden.

| mittl. Korndurchmesser | $Al(OH)_3$ ungemahlen | | $Al(OH)_3$ gemahlen | |
|---|---|---|---|---|
| | a 28 µm | b 28 µm | a 15 µm | b 15 µm |
| Entwässerung | 0 % | 7 % | 0 % | 7 % |
| Viskosität | 7,0 Pa.s | 10 Pa.s. | 14,5 Pa.s | 17 Pa.s |
| LIO (limiting oxygen index) | 32,1 % | 29,5 % | 33,0 % | 30,1 % |
| Absolutweißgrad der Harz-Hydroxid-Mischung | 29 % | 72 % | 29 % | 70 % |
| Biegewechselfestigkeit | 66 N/mm² | 63 N/mm² | 55 N/mm² | 52 N/mm² |
| BET-Oberfläche | 0,2 m²/g | 2,6 m²/g | 1,3 m²/g | 3,5 m²/g |

## Patentansprüche

1. Füllstoff auf der Basis von Aluminiumhydroxid ($Al_2O_3 \cdot xH_2O$, x = 1-3) mit einer endothermen Zersetzungswärme >900 Kj/kg, dadurch gekennzeichnet, daß der Füllstoff aus Hydrargillitkörnern mit einer mittleren Korngröße von über 15µm bis 28µm und einer BET-Oberfläche von weniger als 2 m2/g besteht, deren Kristallite an der Oberfläche entwässert sind und 30-34 Gew.-% an chemisch gebundenem Wasser aufweisen.

2. Füllstoff nach Anspruch 1, dadurch gekennzeichnet, daß die Kristallite an der Oberfläche einen Brechungsindex von mehr als 1,65 aufweisen.

3. Verfahren zur Herstellung eines Füllstoffs nach einem der vorhergehenden Ansprüche, dadurch gekennzeichnet, daß filterfeuchtes Aluminiumhydroxid so getrocknet wird, daß der chemisch gebundene Wasseranteil um 0,6 bis 4,6% reduziert wird.

4. Verwendung des Füllstoffs gemäß Anspruch 1-3 auf Basis von Aluminiumhydroxid in Kunststoffen, insbesondere Epoxidharzen und ungesättigten Polyesterharzen, wobei der Füllstoff aus Hydrargillitkörnern besteht, deren Kristallite an der Oberfläche entwässert sind.

5. Füllstoff auf der Basis von Aluminiumhydroxid ($Al_2O_3 - xH_2O$, x = 1-3) enthaltender flammhemmender Füllstoff, dadurch gekennzeichnet, daß der Kunststoff ein Epoxid und/oder ungesättigtes Polyesterharz ist, in das 50-70 Gew.-% Hydrargillitkörner gemäß Anspruch 1 oder 2 eingemischt sind.

6. Verfahren zur Herstellung eines Füllstoffs nach einem der vorhergehenden Ansprüche, dadurch gekennzeichnet, daß die Entwässerung des Aluminiumhydroxids an Luft erfolgt, wobei die Temperaturen zwischen 180°C (24 Stunden) und 220°C (0,5 Stunden) liegen.

7. Verfahren zur Herstellung eines Füllstoffs nach einem der vorhergehenden Ansprüche, dadurch gekennzeichnet, daß die Entwässerung des Aluminiumhydroxids durch hydrothermale Behandlung bei 180-220°C für 3-0,5 Stunden erfolgt.

## Claims

1. Aluminium hydroxide filler ($Al_2O_3 \cdot xH_2O$, x = 1 - 3) with an endothermic heat of decomposition greater than 900 Kj/kg, characterized by the filler consisting of gibbsite grains with a mean grain size of more than 15 µm to 28 µm and a BET-surface of less than 2 m2/g of which the crystallites at the surface are dehydrated and contain 30-34 wt-% chemically bound water.

2. Filler according to claim 1, characterized by showing at the surface a refractive index greater than 1.65.

3. Process of producing a filler according to one of the preceding claims, characterized by drying the filter-wet aluminium hydroxide in such a way that the content of the chemically bound water is reduced by 0.6 to 4.6%.

4. Use of the aluminium hydroxide filler according to claim 1-3 in synthetics, especially in epoxy resins and unsaturated polyester resins, whereas the filler consists of gibbsite grains of which the crystallites at the surface are dehydrated.

5. Flame-resistant filler based on aluminium hydroxide ($Al_2O_3 - xH_2O$, x = 1-3), characterized in that the synthetic material is an epoxyde and/or an unsaturated polyester resin to which 50-70 wt-% gibbsite grains according to claim 1 or 2 are blended in.

6. Process for Producing a filler according to one of the preceding claims characterized in that the dehydration of the aluminium hydroxide is effected in air whereas the temparatures lie between 180°C (24 hours) and 220°C (1/2 hour).

7. Process for producing a filler according to one of the preceding claims characterized in that the dehydration of the aluminium hydroxide is effected by hydrothermal treatment at 180-220°C during 3 h to 1/2 hour.

**Revendications**

1. Matière de charge à base d'hydioxyde d'aluminium ($Al_2O_3$ - $xB_2O$, x = 1-3) avec une chaleur de décomposition endotherme supérieure à 900 kJ/kg, caractérisée en ce que la matière de charge se compose de grains d'hydrargillite avec une granulométrie moyenne de plus de 15 μm à 28 μm et une surface de BET inférieure à 2 m²/g, dont les cristallites sont déshydratées à la surface et présentent 30 - 34 % en poids d'eau chimiquement liée.

2. Matière de charge selon la revendication 1, caractérisée en ce que les cristallites à la surface présentent un indice de réfraction supérieur à 1.65.

3. Procédé de préparation d'une matière de charge selon l'une des revendications précédentes, caractérisé en ce qu'on sèche l'hydroxyde d'aluminium humide à la filtration de manière que la fraction d'eau chimiquement liée soit reduite de 0.6 à 4,6%.

4. Application de la matière de charge selon les revendications 1 - 3 à base d'hydroxyde d'aluminium dans les matières synthétiques, en particulier les résines époxyde et les résines polyester non saturées, où la matière de charge se compose de grains d'hydrargillite dont les cristall sont déshydratées à la surface.

5. Matière de charge à base d'hydroxyde d'aluminium ($Al_2O_3$ - $XH_2O$, X = 1-3) contenant une matière de charge ignifuge, caractérisée en ce que la matière synthétique est une résine époxyde et/ou polyester non saturée, dans laquelle sont mélangés 50-70% en poids de grains d'hydrargillite selon les revendications 1 et 2.

6. Procédé de préparation d'une matière de charge selon l'une des revendications précédentes, caractérisé en ce que la déshydratation de l'hydroxyde d'aluminium s'effectue à l'air, les températures se situant entre 180°C (24 heures) et 220°C (1/2 heure).

7. Procédé de préparation d'une matière de charge selon l'une des revendications précédentes, caractérisé en ce que la déshydratation de l'hydroxyde d'aluminium s'effectue par traitement hydrothermique à 180-220°C pendant 3 h à 1/2 heure.